# EUROPÄISCHE PATENTANMELDUNG

(11) **EP 2 060 540 A1**
(43) Veröffentlichungstag der Anmeldung: **20.05.2009**
(21) Anmeldenummer: 08019759.3
(22) Anmeldetag: 12.11.2008
(51) Int. Cl.: C02F 1/78, C02F 1/34, F24F 5/00, F24F 6/14, C02F 1/00

(54) **Anlage zur Reinigung vom Umlaufwasser**

(30) Priorität: 13.11.2007 DE 202007015827 U
(71) Anmelder: Koch, Peter, 7423 Pinkafeld (AT)
(72) Erfinder: Koch, Peter, 7423 Pinkafeld (AT)
(74) Vertreter: Hagemann, Heinrich

(57) **Zusammenfassung**

Die Erfindung bezieht sich auf eine Anlage zur Reinigung von Umlaufwasser mit einem Umlaufwasserkreislauf (20), der mehrere Umlaufwassereinheiten (11), insbesondere Umlaufwasser-Befeuchter, Luftwäscher, Versprühbefeuchter und/oder Kühltürme, aufweist, wobei eine zentrale Behandlungseinheit (1) mit einem Ozonisator (2) und einem Kavitator (3) vorgesehen ist, die mit dem Umlaufwasserkreislauf (20) gekoppelt ist.

## Beschreibung

Die Erfindung betrifft eine Anlage zur Reinigung von Umlaufwasser.

Insbesondere Luftreinigungsanlagen, Luftbefeuchtungsanlagen, Versprühbefeuchter oder Kühltürme werden mit Umlaufwasser betrieben, wobei der Qualität des Umlaufwassers dabei entscheidende Bedeutung zukommt. Für die Qualität von Umlaufwasser bestehen je nach Anwendungsfall unterschiedliche Vorgaben. Die Anforderungen an die Wasserqualität sind unter anderem in der VDI 6021, VDI 3803 und der Önorm H 6021 festgelegt. Für Umlaufwasser wird als Qualitätsmerkmal je nach Anforderung und Einsatzzweck eine Anzahl von weniger als 1000 oder 10000 kolonienbildenden Einheiten (KBE) pro Milliliter angegeben. Für das in den Umlaufwasserkreislauf nachgespeiste Wasser ist im Allgemeinen Trinkwasserqualität einzuhalten, d.h. weniger als 100 KBE/ml. Durch diese hygienischen Grenzwerte soll beispielsweise bei Umlaufwasser-Raumbefeuchtern die Übertragung von Krankheitserregern durch die Luft eingeschränkt werden.

Bekannte Anlagen, beispielsweise Versprühbefeuchtungsanlagen weisen Umlaufwasserwannen auf, in denen das Wasser mittels einer Pumpe zu einem Versprühbefeuchter gefördert, der das Wasser in den Raum versprüht, um die Raumluftfeuchte zu beeinflussen. Das versprühte Wasser wird in der Umlaufwasserwanne aufgefangen und wieder zur Befeuchtung verwendet. Von der Luft aufgenommenes Wasser wird der Umlaufwasserwanne nachgespeist. Zur Sicherstellung der Wasserqualität ist jeder Umlaufwasserwanne je eine Behandlungsstufe zugeordnet, in welcher die Anzahl der gesundheitsschädlichen Substanzen reduziert wird. Typischerweise sind dazu mehrere unterschiedliche Stufen pro Umlaufwasserwanne notwendig, insbesondere Bioziddosierung, elektrolytische Verfahren auf Chlorbasis, Dosierung von Wasserstoffdioxid (H₂O₂), Bestrahlung mit ultraviolettem Licht und andere.

Bisherige Anlagen haben den Nachteil, dass durch den komplexen Aufbau der Behandlungsstufen ein hoher Wartungs- und Instandhaltungaufwand erforderlich ist, der zu einem hohen Energie- und Betriebskostenbedarf führt.

Der Erfindung liegt daher die Aufgabe zugrunde, eine Anlage zur Reinigung von Umlaufwasser anzugeben, die einen reduzierten Energie- und Kostenbedarf aufweist und die Umlaufwasserqualität innerhalb der geforderten Grenzwerte aufrecht erhält oder verbessert.

Erfindungsgemäß wird diese Aufgabe durch den Gegenstand des Anspruchs 1 gelöst.

Der Erfindung liegt demnach der Gedanke zugrunde, eine Anlage zur Reinigung von Umlaufwasser mit einem Umlaufwasserkreislauf anzugeben, der mehrere Umlaufwassereinheiten, insbesondere Umlaufwasser-Befeuchter, Luftwäscher, Versprühbefeuchter und/oder Kühltürme, aufweist, wobei eine zentrale Behandlungseinheit mit einem Ozonisator und einem Kavitator vorgesehen ist, die mit dem Umlaufwasserkreislauf gekoppelt ist.

Die Erfindung hat den Vorteil, dass durch die zentrale Behandlungseinheit der Kosten- und Energieaufwand für die Reinigung des Umlaufwassers reduziert wird. Zur Eliminierung bzw. Reduktion der kolonienbildenden Einheiten und sonstigen biologischen Verunreinigungen bzw. flüchtigen organischen Verbindungen (VOC, Volatile Organic Compounds) wird erfindungsgemäß ein Ozonisator eingesetzt, der Ozon als Oxidationsmittel für die Zufuhr zum Umlaufwasser bereitstellt. Auf diese Weise werden Biofilme, Huminsäuren, Viren, Bakterien, VOC-Lasten oder andere biologische Verunreinigungen im Wesentlichen vollständig eliminiert. Durch einen hydromechanischen Kavitationsprozess im Kavitator der Behandlungseinheit wird ferner eine Homogenisierung von Oxidationsmitteln und Wasser erreicht, so dass ein Überschreiten der geltenden Grenzwerte für die Luftreinhaltung durch ein Ausdampfen von Ozon oder anderen Oxidationsmitteln in die Umgebung vermieden wird. Darüber hinaus ermöglicht der Kavitator eine stufenlose Anpassung der abgegebenen Menge des Oxidationsmittels, insbesondere des Ozons.

Bei einer bevorzugten Ausführungsform der erfindungsgemäßen Anlage umfasst die Behandlungseinheit eine Steuereinheit, die mit dem Ozonisator und dem Kavitator gekoppelt ist. Auf diese Weise kann die Menge des erzeugten Ozons sowie die Homogenisierung des Umlaufwassers und Ozons zentral gesteuert und dem aktuellen Bedarf, beispielsweise unter Berücksichtigung des aktuellen Verunreinigungsgrads des Umlaufwassers, angepasst werden, so dass ein wirtschaftlicher und energiesparender Betrieb der Anlage ermöglicht wird.

Vorzugsweise ist in jeweils einem Vorlauf und/oder einem Rücklauf der Umlaufwassereinheiten jeweils ein Sperrventil angeordnet. Dadurch können einzelne Einheiten zu- oder abgeschaltet werden, so dass die Anlage bedarfsgerecht betrieben wird, indem nur diejenigen Umlaufwassereinheiten mit Umlaufwasser versorgt werden, die gerade genutzt werden.

Die Sperrventile können jeweils mit einem Stellantrieb verbunden sein, so dass keine mechanische Betätigung notwendig ist. Das hat den Vorteil, dass das Öffnen und Schließen der Sperrventile schnell und ohne Personaleinsatz erfolgt.

Ferner können die Stellantriebe mit der Steuereinheit gekoppelt sein. Durch die Kopplung an die Steuereinheit können die Sperrventile zentral geöffnet bzw. geschlossen werden. Das ermöglicht schnelle Reaktionen auf den aktuellen Bedarf an Umlaufwassereinheiten, wobei mehrere Sperrventile zeitgleich zentral betätigt werden können. Ferner kann die Steuerung der Stellantriebe mit Hilfe der Steuereinheit mit Rücksicht auf die aktuellen Prozessbedingungen, wie beispielsweise Umlaufwasserdruck oder Umlaufwasserbelastung, geregelt werden.

Bei einer weiteren bevorzugten Ausführungsform der erfindungsgemäßen Anlage sind die Vorläufe mit einem Hauptvorlauf gekoppelt, der die Vorläufe mit der Behandlungseinheit verbindet. Auf diese Weise wird das Umlaufwasser, das die einzelnen Umlaufwassereinheiten durchströmt hat, zentral der Behandlungseinheit zugeführt, wodurch eine zentrale Erfassung von Prozessdaten, insbesondere des Verunreinigungsgrads des Umlaufwassers, ermöglicht wird.

Des Weiteren können die Rückläufe mit einem Hauptrücklauf gekoppelt sein, der die Rückläufe mit der Behandlungseinheit verbindet. Dadurch wird ermöglicht, dass die Qualität des Umlaufwassers nach dem Durchströmen der Behandlungseinheit zentral kontrolliert werden kann.

Vorzugsweise weist der Umlaufwasserkreislauf eine Zuleitung für Nachspeisewasser auf, die mit dem Hauptvorlauf gekoppelt und der zentralen Behandlungseinheit vorgeordnet ist. Auf diese Weise wird das Nachspeisewasser zunächst der Behandlungseinheit zugeführt, so dass eine Reinigung des Nachspeisewassers erfolgt bevor das Nachspeisewasser über den Umlaufwasserkreislauf zu den Umlaufwassereinheiten gelangt. Dadurch wird eine gleich bleibende Qualität des Umlaufwassers sichergestellt.

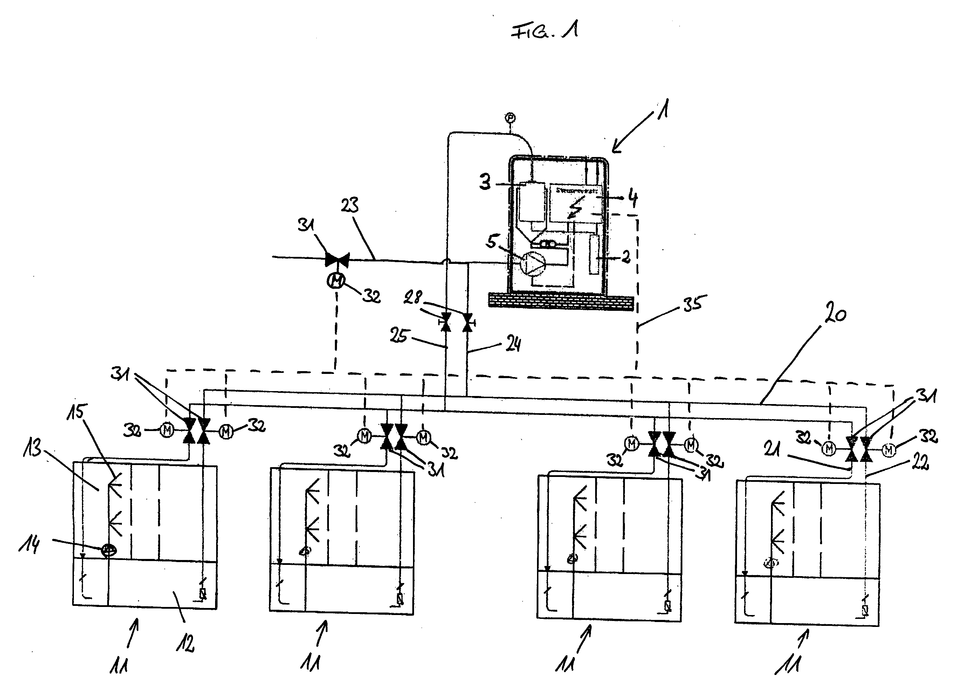

Die Erfindung wird im Folgenden anhand eines Ausführungsbeispiels unter Bezug auf die beigefügte schematische Zeichnung näher erläutert. Darin zeigt die einzige Figur ein Prozessschaltbild einer erfindungsgemäßen Anlage nach einem bevorzugten Ausführungsbeispiel.

Die einzige Figur zeigt eine erfindungsgemäße Anlage als Versprühbefeuchtungsanlage mit einem Umlaufwasserkreislauf 20, der vier Umlaufwassereinheiten 11 und eine Behandlungseinheit 1 umfasst. Die Umlaufwassereinheiten 11 weisen jeweils eine Umlaufwasserwanne 12 auf, in der das Umlaufwasser gesammelt und einem Versprühbefeuchter 15 zur Verfügung gestellt wird. Dazu weist der Versprühbefeuchter 15 eine Hebepumpe 14 auf, die das Umlaufwasser zum Versprühbefeuchter 15 fördert. Der Versprühbefeuchter 15 ist innerhalb eines Raumes 13 angeordnet, der im Allgemeinen Öffnungen aufweist, so dass die befeuchtete Luft an die Umgebung abgegeben wird.

Die Umlaufwassereinheit 11 ist durch einen Vorlauf 21 und einen Rücklauf 22 mit dem Umlaufwasserkreislauf 20 gekoppelt. Dabei ist im Vorlauf 21 bzw. Rücklauf 22 ein Sperrventil 31 vorgesehen, wobei an den Sperrventilen 31 jeweils ein Stellantrieb 32 angeordnet ist, der eine automatisierte Betätigung des Sperrventils 31 ermöglicht.

Die Vorläufe 21 entspringen gemeinsam einem Hauptrücklauf 25, der der zentralen Behandlungseinheit 1 nachgeordnet ist. Die Rückläufe 22 münden in einen gemeinsamen Hauptvorlauf 24, der der zentralen Behandlungseinheit 1 vorgeordnet ist. Außerdem weist der Hauptvorlauf 24 eine Nachspeisewasserzuleitung 23 auf, die in den Hauptvorlauf 24 mündet und ebenfalls ein Sperrventil 31 umfasst, das mit einem Stellantrieb 32 gekoppelt ist.

Die Behandlungseinheit 1 umfasst eine Umwälzpumpe 5, die dem Hauptvorlauf 24 nachgeordnet ist, einen Kavitator 3, der der Umwälzpumpe 5 nachgeordnet ist, und einen Ozonisator 2, der über den Kavitator 3 mit dem Umlaufwasserkreislauf 20 verbunden ist. Ferner weist die Behandlungseinheit 1 eine Steuereinheit 4 auf, die durch eine Steuerleitung 35 mit den Stellantrieben 32, der Umwälzpumpe 5, dem Ozonisator 2 und dem Kavitator 3 verbunden ist.

In der einzigen Figur sind vier Umlaufwassereinheiten 11 dargestellt, denkbar ist jedoch eine beliebige, andere Anzahl von Umlaufwassereinheiten 11.

Während des Betriebs der erfindungsgemäßen Anlage wird Nachspeisewasser über die Nachspeisewasserzuleitung 23 in den Hauptvorlauf 24 geleitet, wobei die Menge des Nachspeisewassers durch ein Sperrventil 31 mit Hilfe eines Stellantriebs 32, der mit der Steuereinheit 4 verbunden ist, geregelt wird. Das Nachspeisewasser vermischt sich mit dem bereits im Kreislauf vorhandenen Umlaufwasser und wird durch die Umwälzpumpe 5 in die Behandlungseinheit 1 gepumpt. Im weiteren Verlauf gelangt das Umlaufwasser zum hydrodynamischen Kavitator 3, wo eine Homogenisierung des Wassers sowie eine Ozoneinleitung durch den Ozonisator 2 stattfinden. Durch das Ozon werden VOC-Bestandteile im Wasser nahezu vollständig vernichtet. Das entkeimte Wasser strömt daraufhin weiter aus der Behandlungseinheit 1 heraus und wird nach Durchlaufen des Hauptrücklaufs 25 auf die Vorläufe 21 der einzelnen Umlaufwassereinheiten 11 verteilt. Dabei können durch die mittels der Steuereinheit 4 gesteuerten Sperrventile 31 die Zulaufmengen zu den einzelnen Umlaufwassereinheiten 11 eingestellt werden. Das Umlaufwasser wird in eine Umlaufwasserwanne 12 geleitet und von dort durch eine Hebepumpe 14 an Versprühbefeuchter 15 gepumpt, die das Wasser in den Raum 13 versprühen, so dass eine Luftbefeuchtung erfolgt. Das versprühte Wasser wird in der Wanne 12 aufgefangen und über den Rücklauf 22 zum Hauptvorlauf 24 geleitet. Dabei kann die abströmende Umlaufwassermenge aus der Wanne 12 heraus durch das Sperrventil 31, das im Rücklauf 22 angeordnet ist, beeinflusst werden, wobei das Sperrventil 31 vorzugsweise durch die Steuereinheit 4 bzw. den Stellantrieb 32 betätigt wird.

Im Wesentlichen wird das Umlaufwasser mehrmals der Behandlungseinheit 1 zugeführt, so dass die Keimzahl bei jedem Durchlauf weiter reduziert wird. Es hat sich gezeigt, dass auf diese Weise die Anzahl kolonienbildender Einheiten pro Milliliter auf Werte deutlich unterhalb der Grenzwerte für Trinkwasser verringert werden kann. Insbesondere ist es denkbar, dabei Werte von annähernd null zu erreichen. Je nach Anforderung an die Reinheit des Umlaufwassers bzw. je nach Qualität des Nachspeisewassers kann eine Reinigung in Zyklen mit einem zeitlichen Abstand von 2 bis 3 Stunden ausreichend sein. Die zeitliche Steuerung der Anlage kann automatisiert durch die Steuereinheit 4 erfolgen, wodurch die Wirtschaftlichkeit und Energieeffizienz der Anlage erhöht wird.

Die Erfindung ist nicht auf das genannte Ausführungsbeispiel beschränkt, vielmehr sind weitere Einsatzmöglichkeiten einer derartigen Anlage möglich, beispielsweise für die Entkeimung und/oder Desinfektion von Umlaufwasser-Befeuchtern, Luftwäschern, Kühltürmen oder anderen geeigneten Vorrichtungen.

### Bezugszeichenliste

- 1: Behandlungseinheit
- 2: Ozonisator
- 3: Kavitator
- 4: Steuereinheit
- 5: Umwälzpumpe

- 11: Umlaufwassereinheit
- 12: Umlaufwasserwanne
- 13: Raum
- 14: Hebepumpe
- 15: Versprühbefeuchter

- 20: Umlaufwasserkreislauf
- 21: Vorlauf
- 22: Rücklauf
- 23: Nachspeisewasserzuleitung
- 24: Hauptvorlauf
- 25: Hauptrücklauf
- 28: Handventil

- 31: Sperrventil
- 32: Stellantrieb
- 35: Steuerleitung

## Patentansprüche

1. Anlage zur Reinigung von Umlaufwasser mit einem Umlaufwasserkreislauf (20), der mehrere Umlaufwassereinheiten (11), insbesondere Umlaufwasser-Befeuchter, Luftwäscher, Versprühbefeuchter und/oder Kühltürme, aufweist, wobei eine zentrale Behandlungseinheit (1) mit einem Ozonisator (2) und einem Kavitator (3) vorgesehen ist, die mit dem Umlaufwasserkreislauf (20) gekoppelt ist.

2. Anlage nach Anspruch 1, **dadurch gekennzeichnet, dass** die Behandlungseinheit (1) eine Steuereinheit (4) umfasst, die mit dem Ozonisator (2) und dem Kavitator (3) gekoppelt ist.

3. Anlage nach Anspruch 1 oder 2, **dadurch gekennzeichnet, dass** in jeweils einem Vorlauf (21) und/oder einem Rücklauf (22) der Umlaufwassereinheiten (11) jeweils ein Sperrventil (31) angeordnet ist.

4. Anlage nach Anspruch 3, **dadurch gekennzeichnet, dass** die Sperrventile (31) jeweils mit einem Stellantrieb (21) verbunden sind.

5. Anlage nach Anspruch 4, **dadurch gekennzeichnet, dass** die Stellantriebe (32) mit der Steuereinheit (4) gekoppelt sind.

6. Anlage nach wenigstens einem der Ansprüche 3 bis 5, **dadurch gekennzeichnet, dass** die Vorläufe (21) mit einem Hauptnachlauf (25) gekoppelt sind, der die Vorläufe (21) mit der Behandlungseinheit (1) verbindet.

7. Anlage nach wenigstens einem der Ansprüche 3 bis 6, **dadurch gekennzeichnet, dass** die Rückläufe (22) mit einem Hauptvorlauf (24) gekoppelt sind, der die Rückläufe (22) mit der Behandlungseinheit (1) verbindet.

8. Anlage nach Anspruch 6 oder 7, **dadurch gekennzeichnet, dass** der Umlaufwasserkreislauf (20) eine Zuleitung für Nachspeisewasser (23) aufweist, die mit dem Hauptvorlauf (24) gekoppelt und der zentralen Behandlungseinheit (1) vorgeordnet ist.
